## Europäisches Patentamt
## European Patent Office
## Office européen des brevets

(19)

(11) Publication number: **0 035 539 B1**

# EUROPEAN PATENT SPECIFICATION
## published in accordance with Art. 158(3) EPC

(12)

(45) Date of publication of patent specification: **13.03.91**   (51) Int. Cl.⁵: **G11B 15/18**

(21) Application number: **80901782.5**

(22) Date of filing: **22.08.80**

(86) International application number:
**PCT/US80/01086**

(87) International publication number:
**WO 81/00782 (19.03.81 81/07)**

(54) **HIGH CAPACITY DATA CARTRIDGE SYSTEM.**

(30) Priority: **04.09.79 US 72229**

(43) Date of publication of application:
**16.09.81 Bulletin 81/37**

(45) Publication of the grant of the patent:
**13.03.91 Bulletin 91/11**

(84) Designated Contracting States:
**DE FR GB**

(56) References cited:
| | |
|---|---|
| **DE-A- 2 756 610** | **GB-A- 2 058 431** |
| **US-A- 2 668 059** | **US-A- 3 088 101** |
| **US-A- 3 192 509** | **US-A- 3 423 743** |
| **US-A- 3 541 271** | **US-A- 3 587 180** |
| **US-A- 3 623 039** | **US-A- 3 692 255** |
| **US-A- 3 804 993** | **US-A- 3 869 719** |
| **US-A- 3 916 440** | **US-A- 3 994 014** |
| **US-A- 4 054 926** | **US-A- 4 081 844** |
| **US-A- 4 200 893** | |

**ELECTRONICS, vol. 52, no. 6, March 15, 1979, New York, US "Fixed-head VCR fills a (loop) hole", pages 72-76**

(73) Proprietor: **MINNESOTA MINING AND MANU-FACTURING COMPANY**
**3M Center, P.O. Box 33427**
**St. Paul, Minnesota 55133-3427(US)**

(72) Inventor: **MOELLER, Gary D.**
**P.O. Box 33427**
**St. Paul, MN 55133(US)**
Inventor: **WOLFF, Robert E.**
**P.O. Box 33427**
**St. Paul, MN 55133(US)**

(74) Representative: **Baillie, Iain Cameron et al**
**c/o Ladas & Parry Isartorplatz 5**
**W-8000 München 2(DE)**

## Description

Technical Field

This invention relates to magnetic tape recorders and preformatted tapes adapted for use therein, and in particular, to such recorders adapted for data recording purposes utilizing magnetic recording tapes preloaded in data cartridges.

Background Art

Data recording cartridges and recorders adapted for their use are notably disclosed and claimed in U.S.-A-3,692,255 (Von Behren). In the cartridge there disclosed a magnetic recording tape is preloaded in a reel-to-reel type enclosure together with an endless flexible belt in frictional contact with the tape on both reel hubs for incrementally bidirectionally driving the tape, including rapid accelerations and decelerations, such as are encountered in digital data recording and playback. While the system there set forth represents many advantages such that data cartridges are filling an important need in the computer industry, especially as backup storage for mini-computer and microprocessor based systems, heretofore they have not been able to offer sufficient capacity to backup fixed mounted rigid disk systems.

Disclosure of Invention

In contrast to the tape cartridge disclosed in the above-cited patent, the present invention is directed to a cartridge system, and to several specific portions thereof, by which a marked increase in storage capacity is achieved. Unlike the prior art cartridge recorders, the present invention is directed to a multitrack recorder in which a preformatted tape i.e., a tape prerecorded with particular code patterns, is utilized to effect subsequent control over data recording and playback operations.

One aspect of the present invention is, therefore, directed to a digital data cartridge comprising a housing and a magnetic recording tape movable along a transport path therein, characterized by said tape having prerecorded patterns extending uniformly across at least a portion of the width of the tape to enable control over the spatial location of data to be subsequently recorded on a multiplicity of tracks within said portion, said patterns including first and second unique patterns located proximate to each end of the tape, indicative of and subsequently detectable and identifiable of each end thereof, and a plurality of key patterns located at uniformly spaced locations along the tape and between the first and second patterns, each of which is unique to and subsequently detectable to identify the beginning of a given one of a plurality of record locations. The key patterns thus enable control of the spatial location of data to be subsequently recorded at any given one of the record locations.

In one embodiment, the first and second unique patterns are constructed so as to be detectable using relatively simple and inexpensive detector logic, as opposed to the more sophisticated logic circuits required to locate and decode the actual digital data itself. In such an embodiment, the first unique pattern comprises an extended length of tape having impressed thereof a pulse train having two components which alternate sequentially at a first predetermined spatial frequency, the first component being characterized by a unidirectional magnetic state, and the second being characterized by two subcomponents which alternate sequentially between oppositely directed magnetic states at a second spatial frequency which is different and higher than said first spatial frequency. Somewhat similarly, the second unique pattern comprises an extended length of tape having impressed thereon a continuous pulse train having two components which alternate between oppositely directed magnetic states at the second predetermined spatial frequency.

Another aspect of the present invention is a system according to claim 8.

According to a further aspect of this invention there is provided a method according to claim 12.

In yet another aspect of this invention there is provided a system for controlling the transverse position of a magnetic recording/playback head according to claim 16.

Brief Description of Drawings

Figure 1 is a view of the surface of a preformatted magnetic tape used in the present invention, with the magnetic patterns shown as though made visible through a magnetic viewing device;

Figure 2 is a similarly visible expanded view of a portion of the tape shown in Figure 1, showing a porton of three parallel tracks;

Figure 3 is an expanded view of a portion of one of the tracks shown in Figure 2, showing the details of a key pattern area along one of the tracks;

Figure 4 is an expanded view of another portion of the pattern shown in Figure 2 showing the details of the manner in which data within each frame is formatted;

Figure 5 is an expanded view of a portion of Figure 4 showing the details in which header information within each frame is formatted; and

Figure 6 is a combined pictorial and block diagram showing a system according to the present invention for utilizing the preformatted tape showing in Figures 1 through 5.

## Best Mode for Carrying Out the Invention

As discussed above, the present invention is preferably directed to a recorder adapted for use with data recording cartridge of the type set forth in U.S. Patent 3,692,255 (Von Behren). In the present invention, such a recorder enables a substantial increase in the storage density of such tape cartridges by making use of information which is pre-recorded on a blank cartridge at the time of manufacture. Such a preformat enables one to subsequently record data on the cartridge with no inter-record gap (IRG) in which the head must be stopped. Such a capability enables enhanced tape utilization. The preformat is independent of the number of tracks to be subsequently recorded. Further, the preformat enables the beginning of tape (BOT) and end of tape (EOT) to be sensed with the signals prerecorded on the tape, thereby eliminating the need for optical sensing techniques. Furthermore, the format enables the use of a redundant code for subsequent error detection and correction.

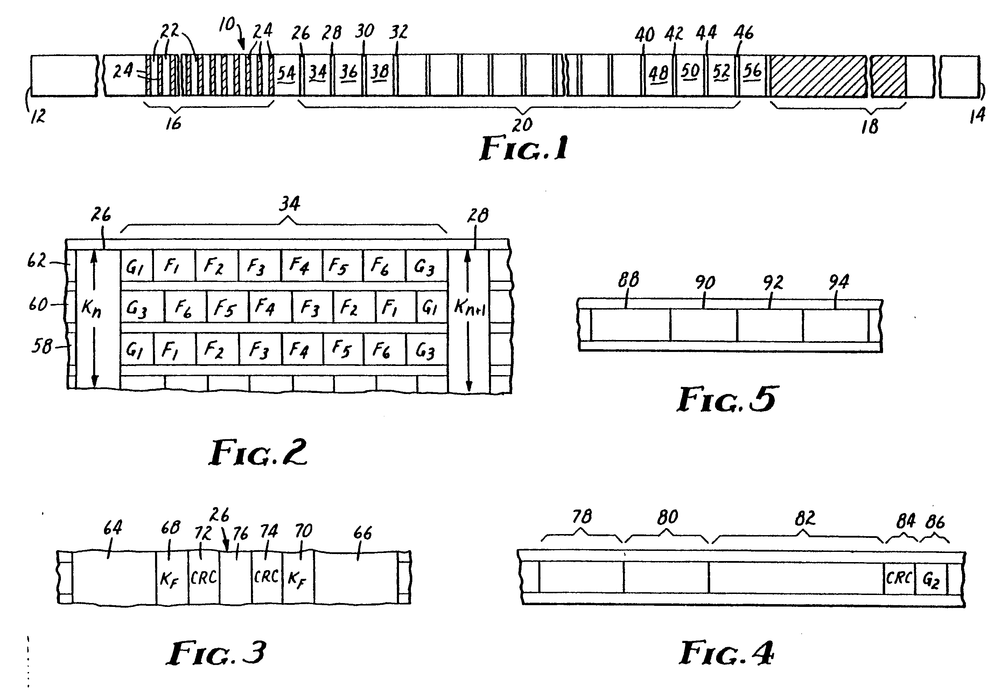

A preferred embodiment of such a pre-recorded format is shown in Figure 1. As there shown, a magnetic tape 10 extending from end 12 to end 14 would desirably be preloaded in a data cartridge (not shown) in the manner set forth in the above-referenced patent. Using an appropriately energized head having a gap which preferably extends across the entire width of the tape, the tape is then recorded with three sets of magnetic patterns such that the patterns similarly extend uniformly across the width of the tape. A first set of patterns 16 thus represents the beginning of tape BOT, a second set 18 represents the end of the tape EOT, and a third set 20, extending the majority of the length of the tape comprises a plurality of magnetic key patterns each of which is located at uniformly spaced locations along the tape. The first and second patterns I6 and 18 respectively, each comprise a separate and unique pattern which is subsequently detectable and identifiable as the beginning of tape and end of tape, respectively, and which are preferably so detectable at various tape velocities utilizing a relatively unsophisticated and inexpensive logic system. Accordingly, the BOT pattern 16 consists of a section of tape approximately 90 cm long onto which is recorded a succession alternating at a first spatial frequency of, for example 15 alternations per cm, in which the succession consists of unidirectionally magnetized areas 22, interspersed with areas 24 in which the magnetization is periodically reversed at a second and higher spatial frequency, such as at a rate of 1970 flux reversals per cm. Such a pattern is readily provided at a recording tape speed of 76 cm per second by utilizing a succession of digital 1's and 0's, (i.e., 101010...) utilizing a conventional Modified Frequency Modulation (MFM) encoding system.

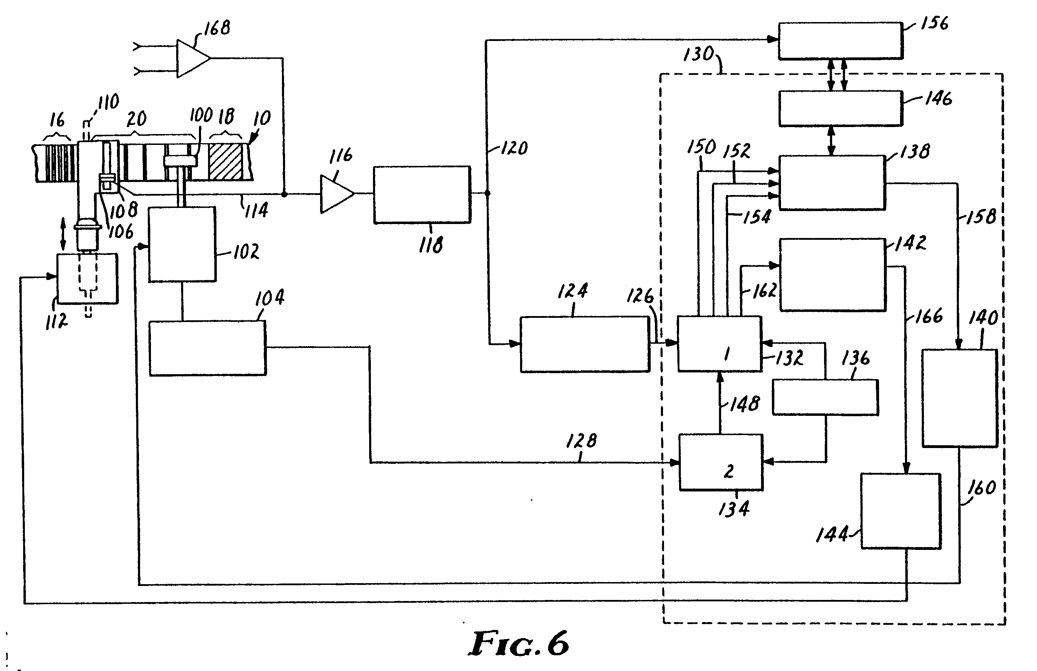

Similarly, the end of the tape pattern 18 is conveniently provided from the same succession of digital 1's and 0's, thereby providing a spatial frequency of 1970 flux reversals per cm, but in which such a pattern is recorded continuously over approximately a 90 cm long section near the end of the tape 14. The manner by which such BOT and EOT patterns 16 and 18 are unambiguously detected and distinguished from actual subsequently recorded digital data is discussed hereinafter in conjunction with Figure 6.

As mentioned above, the third pattern 20 comprises a plurality of magnetic key patterns 26, 28, 30 and 32 respectively, which follow the BOT pattern 16, and which are uniformly spaced. Between each of the key patterns are unrecorded record locations 34, 36, 38, etc. onto which digital data may subsequently be recorded. This succession of key patterns and record locations thus extends the entire length of the tape, culminating in a series of key patterns 40, 42, 44 and 46, respectively, between which are the final record locations 48, 50 and 52. located between the end of the BOT pattern 16 and the first of the key patterns 26 is a portion of tape 54 which is dedicated for recording thereon drive test data. Similarly, following the final key pattern 46 and preceding the end of tape pattern 18 is a second region 56 which is also dedicated to having test drive data recorded thereon. Regions 54 and 56 are formatted similar to patterns 26, 28, etc and thus are indistinguishable from digital data.

As discussed above, the pre-recorded patterns 16, 18 and 20 desirably extend across the entire width of the tape 10 and thereby enable the detection of the BOT and EOT patterns 16 and 18, and key patterns 20 regardless of where a single track head may be positioned over the width of the tape. Similarly, the data locations between each of the key patterns 20 cause the record locations on each track to be positioned in columns extending transversely to the length of the tape.

In a preferred embodiment of the present invention, a 6 mm wide tape 10 is adapted to have recorded thereon 16 tracks of data, each track subsequent to the proceeding one being recorded in an opposite direction onto the tape, resulting in a serpentine track pattern, each track extending over a 0.375 mm width. Thus, for example, during digital recording operations, when an end of tape pattern 18 is detected, the direction of travel of the tape 10 may be automatically reversed and a single track recording head transversely moved across the tape surface to a second transverse location onto which a second track may then be recorded in the opposite direction. When the BOT pattern 16 is subsequently sensed, the direction of the tape may again be reversed and the head advanced to a third track location and a third track recorded in the same direction as that of the first track as discussed here above.

Figure 2 shows an expanded view of the manner in which three such tracks 58, 60 and 62, respectively, may be thus recorded. Each of the record locations, for example, location 34, is preceded by a key pattern 26 identified with that record location and is followed by second key pattern 28 which is identified with the next succeeding record location 36. The key patterns 26, 28, etc., extend across the width of the tape, so as to encompass all of the tracks subsequently recorded thereon. Tracks 58, 60 and 62 are recorded in the serpentine manner discussed above, such that each block of data, i.e., that within record location 34, begins with a key pattern which consists of a block of data 22 bytes in length, as will be described in more detail hereinafter. In this and subsequent examples, each block is formulated in bytes, each containing 8 digital bits. The next portion of the data block comprises an initial erase delay gap $G_1$. Following that gap, a succession of six frames $F_1$, $F_2$, $F_3$, $F_4$, $F_5$, and $F_6$, each 272 bytes long may be recorded. Following the last frame $F_6$, a final erase delay gap $G_3$ may be recorded, thus completing the data block within the record location 34. Once the direction of the tape is reversed, the track 60 may then be recorded in the opposite direction such that key pattern 28 $K_{n+1}$ becomes identified with the frames recorded within record location 34. Analogously to the data recorded in track 58, the data recorded in frame location 34 but within track 60, comprises, from right to left, an initial erase delay gap $G_1$, frames $F_1$ through $F_6$ and the final erase delay gap $G_3$. The data within track 62 is analogously recorded in the same direction as that in track 58.

An expanded view of a typical prerecorded key pattern 26 is shown in Figure 3. As may there be seen, each key pattern consists of an MFM encoded, symmetric pattern in which unit cells are recorded at 3,937 bits per cm. The pattern includes preambles 64 and 66, each of which consists of six bytes, forward keys 68 and 70, each of which are two bytes long, and cyclic redundancy check (CRC) code words 72 and 74, each of which are also two bytes long. All of the respective portions are symmetrically positioned about a two byte gap 76. Thus, for example, the 6 byte preamble may consist of a train of 47 digital 0's followed by a single digital 1, which thus enables synchronization at the beginning of each key pattern. The 2 byte keys 68 and 70 desirably consist of binary representations of numbers ranging between 0 and 65,536, and thus uniquely identify each of the record locations 34, 36, 38 --- 48, 50 thru 52 shown in Figure 1, each of the record locations being given a different binary number. Finally, the 2 byte CRC pattern 72 and 74 is generated in a conventional manner using the following serial calculation: $X^{16} + x^{15} + x^2 + 1$, operating on the data stream, excluding the preamble. The CRC is subsequently used in reading the data to detect the presence of errors.

As is further shown in detail in Figure 4, each of the data frames $F_1$ through $F_6$ in each of the tracks 58 through 62 of the record locations 34, like that of the frames in all of the other record locations, consists of a 6 byte preamble 78, a 6 byte header 80, a 256 byte data portion 82, a 2 byte CRC code word 84, and a two byte inter frame gap $G_2$ 86. The 6 byte preamble 78 is like the preamble 64 in the key patterns 26, 28, etc. in that it comprises a succession of 47 digital zeros followed by a single 1 and is used for synchronization of a phase lock loop for accurate decoding of digital data during playback. Thus, during the playback of a given record location, synchronization is possible both during the playback of the key pattern and also at the beginning of each of the frames $F_1$ through $F_6$. The header portion 80, shown in more detail in Figure 5, consists of a 1 byte track and frame number 88, a 2 byte record number 90, a 1 byte record type number 92, and a 2 byte character count 94. This information may be retrieved and used to uniquely identify the data recorded within each of the frames of a given record location. Digital data may be recorded in the data location 82 in a conventional manner, particularly as is set forth in U.S. Patent 4,145,683 (Brookhart). As is there set forth, digital data is conveniently grouped into a block containing a succession of six frames. Data contained in certain frames is utilized to form parity words, and those words spatially recorded on portions of the tape which are sufficiently remote from the spatial locations of the data words from which those parity words are formed. Accordingly, a drop-out or other defect resulting in an erroneous signal during playback operations will not result in the loss of both the data and the parity words formed from that data. Corrected data words may thus subsequently be constructed from the spatially remote parity words. Unlike the format disclosed in the Brookhart patent referenced above, in the present invention, such parity information is desirably recorded in the frames 5 and 6 of each of the groups of data within a given record location. Thus, a parity word in a given frame $F_5$ is desirably formed from the logical EXCLUSIVE-OR combination of the data in frames $F_1$ and $F_3$, while the parity word in frame $F_6$ is formed from the data words in Frames $F_2$ and $F_4$, respectively. Except for this manner of formatting the parity words and grouping them together at the end of a given record location, the process for forming the parity words, and correcting the data is the same as disclosed in the Brookhart patent referenced above. The CRC code word 84 is formed in an identical fashion to that provided in the key pattern discussed in conjunction with Figure 3.

The manner by which the pre-recorded patterns are utilized to control recording operations during subsequent recording of digital data is best described in conjunction with Figure 6. As may there be seen, the tape 10 within a data cartridge (not shown) is provided with the pre-recorded BOT patterns 16, EOT patterns 18 and key patterns 20, it being recognized that such patterns are shown symbolically and are not accurately representative of the actual spatial configuration or position of the respective patterns. Positioned along a transport path occupied by the tape is a motor driver 100 which is adapted to contact a drive roller within the tape cartridges as discussed in the U.S. Patent 3,692,255 referenced above. The driver 100 is conventionally driven by a drive motor 102, the speed of which is monitored by a digital tachometer 104, all of which components are of conventional construction. Also positioned along the transport path is a record/playback head 106. The head 106 is adapted for tansverse motion across the width of the tape by means of a mount assembly 108 which is in turn movably supported on rod 110. The assembly 108 is coupled to a stepper motor 112, which when sequentially energized moves the assembly and the head in minute steps across the width of the tape.

The output from the record/playback head 106 is coupled by lead 114 to a preamplifier 116 which produces an amplified voltage level corresponding to that provided by the head 106. The output of the amplifier 116 is applied to a threshold detector circuit 118. Signals below a predetermined level, desirably approximately 20 percent of the normal output level, are thus ignored. Conversely, signals passing through the circuit 118 are coupled on output leads 120 to provide an output for the digital data and are also coupled to a retriggerable one-shot circuit 124. The circuit 124 has incorporated therein an RC circuit having a time constant which is long relative to the spacing between pulses resulting from the high frequency portion of the BOT pattern 16 or the continuous alterations in the EOT pattern 18 as shown in Figure 1. Accordingly, so long as such high-frequency signals are present, the output of the one-shot circuit 124 will remain high. Conversely, the time constant within the circuit 124 is short relative to the duration of signals resulting from the unidirectional portion 22 of the BOT signal 16 as shown in Figure 1 or gap portions with the record locations. Accordingly, upon the absence of such high-frequency signals, the retriggerable one-shot circuit "times out", and produces a pulse on output lead 126. A comparison of the number of such pulses on lead 126 as opposed to those provided by the digital tachometer 104 on leads 128 during a given time period thus enables the detection of the BOT and EOT patterns as distinct from digital data in the manner described hereinafter.

The processing of the pulses appearing on leads 126 and 128 are preferably done within a local microprocessor 130. As is shown in Figure 6, the microprocessor 130 may be functionally viewed as containing a first counter 132, a second counter 134, a preloader 136, a command capture network 138, a tape drive motor control 140, a head position control 142, a stepper motor control 144, and an interface network 146.

The manner by which such functional equivalents are performed within the microprocessor 130 is as follows. Upon initiation of a given sequence of operations, the preloader 136 places a digital number into counters 132 and 134. As signal pulses are applied from the respective inputs on leads 126 and 128, they are subtracted from the preloaded number within each of the respective counters. An output on lead 148 from counter 134 is provided when the number of pulses provided from the tachometer 102 is equivalent to the passage of approximately 7.5 cm of tape, thereby enabling a sufficient redundancy to ensure the presence of either a BOT or an EOT signal pattern, as opposed to digital data within the respective record locations. This is achieved by preloading the counter 134 with a digital number such that when the number of pulses received on lead 128 equals the preloaded number, an output is produced which in turn stops the count within counter 132. At that time, the number within counter 132 is in and of itself indicative of the type of pattern detected. If the number remaining in counter 132 is still the same as that initially placed into the counter from the preloader 136, for example, a preload of the number 100, it is evident that no pulses on lead 126 have occurred thus indicating a continuous succession of high frequency signals, i.e., an end of tape signal such as reproduced from the pattern 18 as shown in Figure 1. Conversely, if the number is negative, such that more pulses than the preloaded number of 100 have been subtracted, it is indicative of the presence of a large number of gap pulses such as produced by a succession of the unidirectional pulse regions 22, and is thus an indication of a BOT pattern is present. On the other hand, if the number within the counter is between zero and 100, an indication that normal digital data is present is provided. These three command indications are coupled on leads 150, 152, and 154 to the command capture network 138. As is shown, this network is coupled through interface network 146 to an external controller 156. Depending upon the instructions from the controller, the command capture network may then send an appropriate signals on lead 158 to the tape drive motor control 140 and thence apply drive signals on leads 160 to drive the motor 102 in the appropriate direction, depending upon whether a BOT or EOT signal has been sensed. Similarly upon sensing of either a BOT or EOT signal, a signal from counter 132 is coupled on lead 162 to the head position control 142. Again in response to instructions from controller 156 through the interface network 146, the head position control 142 provides an output signal on lead 166 to the stepper motor control 144, which in turn provides drive pulses to the stepper motor 112 and thereby steps the head 106 to an appropriate track location.

While the respective functions described above within the microprocessor 130 have been described in functional terms, it must be recognized that such functions are desirably performed by means of software instructions within a microprocessor as is now conventionally effected. In the preferred embodiment described herein, a microprocessor type MC 6803 manufactured by Motorola Semiconductor Corp. has been implemented.

The actual interpretation of data appearing on output lead 120 will also be coupled to the controller 156, within which is another microprocessor. It is thus the function of the controller processor to read the data at output 120 and to manage the interpretation of the format. However, the recognition of the key patterns identifying the begining of each of the record locations must first be accomplished, prior to writing digital data within a given record location. Accordingly, the master controller 156 instructs the command capture network through interface 146 to initiate tape motion and transverse head motion so as to cause the head to traverse the appropriate track on the tape until the appropriate record location is detected. Once the appropriate key pattern is found, the controller allows the drive to run for a brief time, after which write current is coupled to the head 106 via amplifier 168. After a short delay needed for the gap within the head 106 to reach an area within the initial gap $G_1$, the writing of digital data within the record location actually begins. After completion of the writing of the data block, a constant current is applied to the head to obliterate all previously recorded data within that data block. The current is then turned off prior to the appearance of the next key pattern.

The pre-recorded patterns extending the width of the tape are further utilized during initial loading operations to determine the precise edge of the tape and thereby provide a reference position for the head 106 from which all subsequent track locations may be indexed. The manner by which such an operation is effected is as follows. When a cartridge is first inserted into the system, the controller 156 initiates a conditioning sequence during which the tape is repacked by running to the end of tape and back to the beginning of the tape. Upon detection of the beginning of tape signal, the head position control is then instructed to cause the stepper motor 112 to sequentially step the head toward one edge of the tape. This sequential stepping operation continues until the signal coupled to the threshold circuit 118 drops below a predetermined threshold level. The position of the head when the signal drops below the threshold level is then defined as the zero or reference position, and forms a reference point from which the head is subsequently instructed to be stepped so as to define future track locations.

## Claims

1. A digital data cartridge comprising a housing and a magnetic recording tape (10) movable along a transport path therein, characterized by said tape (10) having prerecorded patterns (16, 18 and 20) extending uniformly across at least a portion of the width of the tape to enable control over the spatial location of data to be subsequently recorded on a multiplicity of tracks within said portion, said patterns including first and second unique patterns (16 and 18 respectively) located proximate to each end (12 and 14) of the tape, indicative of and subsequently detectable and identifiable of each end thereof, and a plurality of key patterns (26, 28, 30 and 32) located at uniformly spaced locations along the tape and between the first and second patterns, each of which is unique to and subsequently detectable to identify the beginning of a given one of a plurality of record locations.

2. A digital data cartridge according to claim 1 adapted for use in a data cartridge drive unit having a record/playback head (106) positionable transversely to the tape transport path, characterized by said patterns each extending uniformly across the entire width of the tape, the edges of the patterns (16, 18 and 20) being detectable by said head for providing a reference head position from which the head may be controllably transversely positioned.

3. A digital data cartridge according to claim 1 adapted for use in a data cartridge drive unit having a record/playback head (106) positionable transversely to the tape transport path to enable recording and reproduction of data from a plurality of parallel tracks (58, 60 and 62) along the tape, characterized by said patterns each extending uniformly across the entire width of the tape, the edges of said patterns being detectable by said head for providing a reference head position from which the head may be controllably transversely positioned to a given one of said plurality of tracks.

4. A digital data cartridge according to any preceding claim, characterized by said key patterns each comprising subpatterns(64 and 66,68 and 70, and 72 and 74)on the leading and trailing edges thereof enabling synchronization at the beginning of each key pattern.

5. A digital data cartridge according to any preceding claim, characterized by said first pattern (16) comprising a succession of magnetized zones (22 and 24) which alternate at a first predetermined spatial frequency between a first subpattern (22) having a unidirectional magnetic state and a second subpattern (24) having a succession of subzones between oppositely directed magnetic states at a second spatial frequency which is different from and higher than said first spatial frequency, and by said second pattern (18) comprising a succession of magnetized zones alternating between oppositely magnetic states at said second spatial frequency.

6. A data cartridge according to any preceding claim, characterized by said key patterns (26, 28, 30 and 32) corresponding to a digital code adapted for identification of each of said record locations when the tape is moved in either direction, such that data may be subsequently recorded in one direction on some of the multiple tracks on the tape and in the opposite direction on the remaining tracks.

7. A data cartridge according to claim 6 when appended to claim 4, characterized by said subpatterns (64 and 66, 68 and 70, and 72 and 74) being symmetrically positioned about a center location (76) to enable detection of said subpatterns independent of the direction of tape movement.

8. A system for recording a predetermined format on a magnetic recording tape (10) adapted for use in a digital data cartridge and drive unit (100, 102) therefor to enable control over the transverse position of a record/playback head (106) within the drive unit and over the longitudinal movement of the tape within the cartridge to in turn control subsequent recording or reproduction of digital data at preestablished record locations within a selected track along the tape, comprising
a) means (100, 102) for positioning and driving the magnetic recording tape (10) along a transport path,
b) means (108, 112) for positioning along said transport path a magnetic recording head having a recording gap extending substantially normal to the transport path characterised by a gap width extending uniformly across the width of the tape to enable recording magnetic patterns uniformly across the width of the tape, and said system having
c) means for energizing said head for recording in said tape a plurality of patterns (16, 18 and 20) extending uniformly across at least a portion of the width of the tape to enable subsequent control over the spatial location of data to be subsequently recorded on a multiplicity of tracks thereon, such that the record location in each track are substantially at the same spatial location transverse to the tracks, said energizing means including means for providing in said tape a first unique magnetic pattern (16) proximate one end of the tape indicative of and subsequently detectable and identifiable of the beginning of the tape, a second unique pattern (18) proximate the other end of the tape different from the first and indicative of and subsequently detectable and identifiable of the end of the tape, and uniformly spaced along the tape and between the 1st and 2nd unique patterns, and a plurality of magnetic key patterns (26, 28, 30, 32), each of which is unique to and subsequently detectable to identify the beginning of a given one of a plurality of record locations (34, 36, 38) so as to enable the control of the spatial location of data to be subsequently recorded at a given one of said record locations.

9. A system according to claim 8, characterized by said means for energizing further comprising means for recording in said tape a said first pattern comprising a succession of magnetized zones (22, 24) alternating at a first predetermined spatial frequency between a first subpattern (22) having a unidirectional magnetic state, and a second subpattern (24) having a succession of subzones between oppositely directed magnetic states at a second spatial frequency which is different from and higher than said first spatial frequency, and by means for recording in said tape a said second pattern comprising a succession of magnetized zones, which zones alternate between oppositely directed magnetic states at said second spatial frequency.

10. A system according to claim 9, characterized by said means for energizing comprising

a) means for generating a first electrical pulse train having two components (22, 24) alternating at a first predetermined spatial frequency, the first component (22) having a unidirectional electrical current, and the second (24) having two subcomponents in which the electrical current alternates in opposite directions at a second predetermined spatial frequency which is different and higher than said first spatial frequency, and for outputting said first pulse train to said head (106) for a predetermined duration in response to an indication that a portion of the tape proximate one end thereof is traversing the head to impress on that end portion as said first unique pattern a magnetic pattern corresponding to said first pulse train, and

b) means for generating a second electrical pulse train (18) having two components in which the electrical current alternates in opposite directions at said second predetermined spatial frequency, and for outputting to said head said second electrical pulse train for a predetermined duration in response to an indication that a portion of the tape proximate the other end thereof is traversing the head to impress on the other end portion as said second unique pattern a magnetic pattern corresponding to said second pulse train.

11. A system according to claims 9 or 10, characterized by said means for energizing further comprising means for generating electrical signal patterns corresponding to a digital code adapted for identification of each of said record locations, each of said signal patterns containing subpatterns (64, 66, 68, 70, 72, 74) symmetrically positioned about a center location (76), whereby the patterns may be detected when the tape is moved in either direction and data subsequently recorded in one direction on some of the multiple tracks on the tape and in the opposite direction on the remaining tracks, and for outputting said signal patterns to said head (106) at predetermined times as the tape is moved thereby to record upon the portion of the tape between said end portions said plurality of individually predetermined magnetic key patterns.

12. A method for recording a predetermined format on a magnetic recording tape (10) adapted for use in a digital data cartridge and drive unit (100, 102) therefor to enable control over the transverse position of a record/playback head (106) within the drive unit and over the longitudinal movement of the tape within the cartridge to in turn control subsequent recording or reproduction of digital data at preestablished record locations within a selected track along the tape, said method comprising the steps of:

a) positioning (108, 112) and driving the magnetic recording tape (10) along a transport path,

b) positioning along said transport path a magnetic recording head (106) having a recording gap extending substantially normal to the transport path and said method being characterised by

c) energising said head (106) which is arranged to have a gap width extending uniformly across the width of the tape to enable recording magnetic patterns uniformly across the width of the tape for recording in said tape a plurality of patterns (16, 18 and 20) extending uniformly across at least a portion of the width of the tape to enable subsequent control over the spatial location of data to be subsequently recorded on a multiplicity of tracks thereon, such that the record location in each track are substantially at the same spatial location transverse to the tracks, said energizing means including means for providing in said tape a first unique magnetic pattern (16) proximate one end of the tape indicative of and subsequently detectable and identifiable of the beginning of the tape, a second unique pattern (18) proximate the other end of the tape different from the first and indicative of and subsequently detectable and identifiable of the end of the tape, and uniformly spaced along the tape and between the 1st and 2nd unique patterns, and a plurality of magnetic key patterns (26, 28, 30, 32), each of which is unique to and subsequently detectable to identify the beginning of a given one of a plurality of record locations (34, 36, 38) so as to enable the control of the spatial location of data to be subsequently recorded at a given one of said record locations.

13. A method according to claim 12, characterized by said energizing step further comprising recording in said tape a said first pattern comprising a succession of magnetized zones alternating at a first predetermined spatial frequency between a first subpattern (22) having a unidirectional magnetic state, and a second subpattern (24) having a succession of subzones between oppositely directed magnetic states at a second spatial frequency which is different from and higher than said first spatial frequency, and by recording in the tape a said second pattern comprising a succession of magnetized zones, which zones alternate between oppositely directed magnetic states at said second spatial frequency.

14. A method according to claim 13, characterized by said energizing step comprising

a) generating a first electrical pulse train (16) having two components (22, 24) alternating at a first predetermined spatial frequency, the first component (22) having a unidirectional electrical current, and the second (24) having two subcomponents in which the electrical current alternates in opposite directions at a second predetermined spatial frequency which is different and higher than said first spatial frequency, and outputting said first pulse train to said head (106) for a predetermined duration in response to an indication that a portion of the tape proximate one end thereof is traversing the head to impress on that end portion as said first unique pattern a magnetic pattern corresponding to said first pulse train, and

b) generating a second electrical pulse train (18) having two components in which the electrical current alternates in opposite directions at said second predetermined spatial frequency, and outputting to said head said second electrical pulse train for a predetermined duration in response to an indication that a portion of the tape proximate the other end thereof is traversing the head to impress on the other end portion as said second unique pattern a magnetic pattern corresponding to said second pulse train.

15. A method according to claims 13 or 14, characterized by said energizing step further comprising generating electrical signal patterns corresponding to a digital code adapted for identification of each of said record locations, each of said signal patterns containing subpatterns (64, 66, 68, 70, 72, 74) symmetrically positioned about a center location (76), whereby the patterns may be detected when the tape is moved in either direction and data subsequently recorded in one direction on some of the multiple tracks on the tape and in the opposite direction on the remaining tracks, and outputting said signal patterns to said head (106) at predetermined times as the tape is moved thereby to record upon the portion of the tape between said end portions said plurality of individually predetermined magnetic key patterns.

16. A system for controlling the transverse position of a magnetic recording/playback head (106) relative to a magnetic recording tape (10) movable along a transport path within a digital data cartridge to enable recording and playback from a selected one of a plurality of parallel tracks thereon, said system comprising means (100 and 102) for positioning and driving a said tape along said transport path, and a magnetic record and playback head (106) positioned along said transport path for generating electrical signals corresponding to signals recorded on said tape, characterized by said tape having prerecorded patterns (16, 18 or 20), extending uniformly across at least a portion of the width of the tape and terminating at a common line, said patterns including a first unique magnetic pattern (16) prerecorded proximate one end (12) thereof, indicative of and subsequently detectable and identifiable of the beginning of the tape, a second unique pattern (18) prerecorded proximate the other end (14) thereof, different from the first and indicative of and subsequently detectable and identifiable of the end of the tape, and a plurality of magnetic key patterns (26, 28, 30 and 32) prerecorded at uniformly spaced locations along the tape and between the first and second unique patterns, each of which is unique to and subsequently detectable to identify the beginning of a given one of a plurality of record locations, so as to enable the control of the spatial location of data to be subsequently recorded at a given one of said record locations, said system further being characterized by means (108 and 112) for controllably incrementally positioning said head transversely with respect to said transport path beyond said common line, and processor means (130) responsive to said electrical signals corresponding to any of said patterns for enabling said head positioning means to incrementally move the head transversely to determine a reference head position at said common line from which subsequent incremental movement of the head may be indexed to enable the head to be transversely positioned at a selected one of a plurality of predetermined distances from the reference position, each of which distances initially defines and subsequently corresponds to one of said plurality of tracks.

17. A system according to claim 16, characterized by said patterns on the tape extending uniformly across the entire width of the tape, said means (108 and 112) for incrementally positioning said head comprising means for incrementally positioning said head beyond an edge of the tape, and by said processor means (130) including means (142 and 144) for causing said head to incrementally move transversely to determine said reference head position at an edge of the tape.

18. A system according to claim 16, characterized by said patterns on the tape including a plurality of different digital key patterns (26, 28, 30 and 32) of equal length separated from each other by record locations of greater equal length, each key pattern uniquely identifying an adjacent record location, said processor means (130) comprising means (132, 134, 136, 138, 140) responsive to electrical signals corresponding to said key patterns and to said reference position for enabling said positioning and driving means (100 and 102) to drive the tape to a record location adjacent a selected key pattern and also for enabling said head positioning means (108 and 112) to position the head a selected distance from said reference position, whereby data may be recorded at or reproduced from the selected record location and the selected track defined by said distance.

19. A system according to any of claims 16-18, characterized by said means (130) responsive to electrical signals further comprising means (118) for setting a threshold level of said signals and for detecting the point of said incremental movement at which the detected level of said signals falls below said threshold level, thereby establishing said reference head position.

20. A system according to any of claims 16-18, characterized by said incremental head positioning means includes a stepper motor (112) for transversely stepping the position of said head a distance equal to an integral multiple of a predetermined track-to-track spacing.

21. A system according to any of claims 16-20, further characterized by

e) means responsive to electrical signals corresponding to said first or second unique patterns, said responsive means including

i) means (124) coupled to said playback head for producing a gap indication pulse each time signals corresponding to components alternating at said second spatial frequency are not sensed within a given period of time,

ii) tachometer means (104) for generating a succession of pulses the periodicity of which is indicative of the rate of tape motion, and

iii) said processor means (130) including a first counter (134) coupled to receive said pulses from said tachometer means for counting a determined number of said pulses and for providing an output pulse upon completion of said count as an indication of the passage of a given length of tape, and including a second counter (132) coupled to receive said gap indication pulse and said output pulse from said first counter for counting the number of such gap indication pulses received prior to receipt of said output pulse, whereby the absence of any counted gap indication pulses prior to the receipt of said output pulse is recognizable as corresponding to said second unique pattern, and a counted number of gap indication pulses in excess of a given value prior to the receipt of said output pulse is recognizable as corresponding to said first unique pattern.

## Revendications

1. Cartouche de données numériques comprenant un boîtier et une bande d'enregistrement magnétique (10) mobile le long d'un chemin de déplacement à l'intérieur du boîtier, caractérisée en ce que ladite bande (10) comporte des configurations préenregistrées (16, 18 et 20) s'étendant uniformément sur au moins une partie de la largeur de la bande pour permettre la commande de la position spatiale des données à enregistrer ensuite sur une pluralité de pistes dans ladite partie, lesdites configurations comprenant une première et une deuxième configurations spécifiques (16 et 18 respectivement) situées près de chaque extrémité (12 et 14) de la bande, indicatives de chaque extrémité de la bande et qui peuvent ensuite être détectées pour identifier chaque extrémité, et une pluralité de configurations de clé (26, 28, 30 et 32) situées à des endroits uniformément espacés le long de la bande et entre les première et deuxième configurations, chaque configuration de clé étant spécifique et pouvant ensuite être détectée pour identifier le début d'un emplacement donné parmi une pluralité d'emplacements d'enregistrement.

2. Cartouche de données numériques suivant la revendication 1, prévue pour l'utilisation dans un appareil d'entraînement de cartouche de données comprenant une tête d'enregistrement/reproduction (106) positionnable transversalement au chemin de déplacement de la bande, caractérisée en ce que lesdites configurations s'étendent chacune uniformément sur toute la largeur de la bande, les bords des configurations (16, 18 et 20) pouvant être détectés par ladite tête pour fournir une position de référence de tête à partir de laquelle la tête peut être positionnée transversalement de façon commandée.

3. Cartouche de données numériques suivant la revendication 1, prévue pour l'utilisation dans un appareil d'entraînement de cartouche de données comportant une tête d'enregistrement/reproduction (106) positionnable transversalement au chemin de déplacement de la bande pour permettre l'enregistrement et la reproduction de données à partir d'une pluralité de pistes parallèles (58, 60 et 62) le long de la bande, caractérisée en ce que lesdites configurations s'étendent chacune uniformément sur toute la largeur de la bande, les bords desdites configurations étant détectables par ladite tête pour fournir une position de référence de tête à partir de laquelle la tête peut être positionnée transversalement, de façon commandée, à une piste donnée parmi ladite pluralité de pistes.

4. Cartouche de données numériques suivant l'une quelconque des revendications précédentes, caractérisée en ce que lesdites configurations de clé comprennent chacune des configurations secondaires (64 et 66, 68 et 70, 72 et 74) sur leurs bords avant et arrière, permettant la synchronisation au début de chaque configuration de clé.

5. Cartouche de données numériques suivant l'une quelconque des revendications précédentes, caractérisée en ce que ladite première configuration (16) comprend une succession de zones magnétisées (22 et 24) qui alternent, à une première fréquence spatiale prédéterminée, entre une première configuration secondaire (22) présentant un état magnétique unidirectionnel et une deuxième configuration secondaire (24) présentant une succession de sous-zones qui alternent entre des états magnétiques de sens opposé à une deuxième fréquence spatiale qui diffère de ladite première fréquence spatiale et est plus élevée que celleci, et en ce que ladite deuxième configuration (18) comprend une succession de zones magnétisées qui alternent entre des états magnétiques de sens opposé à ladite deuxième fréquence spatiale.

6. Cartouche de données suivant l'une quelconque des revendications précédentes, caractérisée en ce que lesdites configurations de clé (26, 28, 30 et 32) correspondent à un code numérique prévu pour l'identification de chacun desdits emplacements d'enregistrement lorsque la bande se déplace dans un sens ou dans l'autre, de sorte que des données peuvent être ensuite enregistrées dans un sens sur certaines des pistes multiples sur la bande et dans le sens opposé sur les autres pistes.

7. Cartouche de données suivant la revendication 6, lorsqu'elle dépend de la revendication 4, caractérisée en ce que lesdites configurations secondaires (64 et 66, 68 et 70, et 72 et 74) sont situées symétriquement par rapport à un emplacement central (76) pour permettre la détection desdites configurations secondaires indépendamment du sens de déplacement de la bande.

8. Système pour l'enregistrement d'un format prédéterminé sur une bande d'enregistrement magnétique (10) prévue pour l'utilisation dans une cartouche de données numériques et un appareil d'entraînement (100, 102) pour cette bande de manière à permettre la commande de la position transversale d'une tête d'enregistrement/reproduction (106) dans l'appareil d'entraînement et du mouvement longitudinal de la bande dans la cartouche, afin de commander ensuite l'enregistrement ou la reproduction subséquents de données numériques à des emplacements d'enregistrement pré-établis dans une piste choisie le long de la bande, comprenant :

a) des moyens (100, 102) pour positionner et entraîner la bande d'enregistrement magnétique (10) le long d'un chemin de déplacement ;

b) des moyens (108, 112) pour positionner le long dudit chemin de déplacement une tête d'enregistrement magnétique présentant un entrefer d'enregistrement qui est sensiblement perpendiculaire au chemin de déplacement, caractérisé par une largeur d'entrefer s'étendant uniformément sur la largeur de la bande pour permettre l'enregistrement de configurations magnétiques uniformément sur la largeur de la bande, et ledit système comprenant :

c) des moyens d'excitation de ladite tête pour enregistrer dans ladite bande une pluralité de configurations (16, 18 et 20) s'étendant uniformément sur au moins une partie de la largeur de la bande afin de permettre la commande subséquente de la position spatiale des données à enregistrer ensuite sur une pluralité de pistes de la bande, de sorte que l'emplacement d'enregistrement dans chaque piste se trouve sensiblement à la même position spatiale transversalement aux pistes, lesdits moyens d'excitation comprenant des moyens pour engendrer dans ladite bande une première configuration magnétique spécifique (16) près d'une extrémité de la bande, indicative du début de la bande et qui peut être ensuite détectée pour identifier le début de la bande, une deuxième configuration spécifique (18) près de l'autre extrémité de la bande, qui diffère de la première configuration et qui est indicative de l'extrémité de la bande et peut ensuite être détectée pour identifier cette extrémité, et une pluralité de configurations magnétiques de clé (26, 28, 30, 32) uniformément espacées le long de la bande et entre les première et deuxième configurations spécifiques, chaque configuration de clé étant particulière et pouvant ensuite être détectée pour identifier le début d'un emplacement donné parmi une pluralité d'emplacements d'enregistrements (34, 36, 38) afin de permettre de déterminer la position spatiale des données à enregistrer ensuite à un emplacement donné parmi lesdits emplacements d'enregistrement.

9. Système suivant la revendication 8, caractérisé en ce que lesdits moyens d'excitation comprennent en outre des moyens pour enregistrer dans ladite bande une dite première configuration comprenant une succession de zones magnétisées (22, 24) alternant à une première fréquence spatiale prédéterminée entre une première configuration secondaire (22), qui présente un état magnétique unidirectionnel, et une deuxième configuration secondaire (24) qui présente une succession de sous-zones entre des états magnétiques de sens inverse à une deuxième fréquence spatiale qui diffère de ladite première fréquence spatiale et est plus élevée que celle-ci, et en ce que les moyens d'enregistrement dans ladite bande d'une dite deuxième configuration comprennent une succession de zones magnétisées, ces zones alternant entre des états magnétiques de sens inverse à ladite deuxième fréquence spatiale.

10. Système suivant la revendication 9, caractérisé en ce que lesdits moyens d'excitation comprennent :

a) des moyens pour générer un premier train d'impulsions électriques (16) ayant deux composantes (22, 24) qui alternent à une première fréquence spatiale prédéterminée, la première composante (22) ayant un courant électrique unidirectionnel et la deuxième composante (24) ayant deux sous-composantes dans lesquelles le courant électrique alterne dans des directions opposées à une deuxième fréquence spatiale prédéterminée qui est différente de ladite première fréquence spatiale et supérieure à celleci, et pour envoyer ledit premier train d'impulsions à ladite tête (106) pendant un laps de temps prédéterminé, en réponse à une indication qu'une partie de la bande près d'une de ses extrémités se déplace sous la tête, afin d'enregistrer sur cette partie d'extrémité, comme dite première configuration spécifique, une configuration magnétique correspondant audit premier train d'impulsions, et

b) des moyens pour générer un deuxième train d'impulsions électriques (18) comprenant deux composantes dans lesquelles le courant électrique alterne en sens inverse à ladite deuxième fréquence spatiale prédéterminée, et pour envoyer à ladite tête ledit deuxième train d'impulsions électriques pendant un temps prédéterminé, en réponse à une indication qu'une partie de la bande près de son autre extrémité se déplace sous la tête, afin d'enregistrer sur l'autre partie d'extrémité, comme dite deuxième configuration spécifique, une configuration magnétique correspondant audit deuxième train d'impulsions.

11. Système suivant la revendication 9 ou 10, caractérisé en ce que lesdits moyens d'excitation comprennent en outre des moyens pour générer des configurations de signal électrique, correspondant à un code numérique prévu pour l'identification de chacun desdits emplacements d'enregistrement, chacune desdites configurations de signal contenant des configurations secondaires (64, 66, 68, 70, 72, 74) situées symétriquement par rapport à un emplacement central (76), de sorte que les configurations peuvent être détectées lorsque la bande se déplace dans un sens ou dans l'autre et que des données peuvent ensuite être enregistrées dans un sens sur certaines des pistes multiples sur la bande et en sens inverse sur les autres pistes, et pour envoyer lesdites configurations de signal à la dite tête (106) à des instants prédéterminés, lorsque la bande est déplacée sous la tête, de manière à enregistrer, sur la partie de la bande comprise entre lesdites parties d'extrémité, ladite pluralité de configurations de clé magnétiques individuellement prédéterminées.

12. Procédé pour enregistrer un format prédéterminé sur une bande d'enregistrement magnétique (10) prévue pour l'utilisation dans une cartouche de données numériques et un appareil d'entraînement (100, 102) pour la bande de manière à permettre la commande de la position transversale d'une tête d'enregistrement/reproduction (106) dans l'appareil d'entraînement et du mouvement longitudinal de la bande dans la cartouche, afin de commander l'enregistrement ou la reproduction subséquents de données numériques à des emplacements d'enregistrement préétablis dans une piste choisie, le long de la bande, ledit procédé comprenant les opérations de :
a) positionnement (108, 112) et entraînement de la bande d'enregistrement magnétique (10) le long d'un chemin de déplacement,
b) positionnement, le long dudit chemin de déplacement, d'une tête d'enregistrement magnétique (106) présentant un entrefer d'enregistrement qui est sensiblement perpendiculaire au chemin de déplacement, ledit procédé étant caractérisé par :
c) l'excitation de ladite tête (206) qui est agencée de manière à avoir une largeur d'entrefer s'étendant uniformément sur la largeur de la bande pour permettre d'enregistrer des configurations magnétiques uniformément sur la largeur de la bande, de manière à enregistrer sur ladite bande une pluralité de configurations (16, 18 et 20) s'étendant uniformément sur au moins une partie de la largeur de la bande afin de permettre la détermination subséquente de l'emplacement spatial de données à enregistrer ensuite sur une pluralité de pistes sur la bande, de sorte que les emplacements d'enregistrement dans chaque piste sont sensiblement à la même position spatiale transversalement aux pistes, lesdits moyens d'excitation comprenant des moyens pour engendrer dans ladite bande une première configuration magnétique spécifique (16) près d'une extrémité de la bande, indicative du début de la bande et qui peut ensuite être détectée et identifier ce début, une deuxième configuration spécifique (18) près de l'autre extrémité de la bande, différente de la première et indicative de la fin de la bande et qui peut ensuite être détectée et identifier la fin de la bande, et une pluralité de configurations magnétiques de clé (26, 28, 30, 32) uniformément espacées le long de la bande et entre les première et deuxième configurations spécifiques, chaque configuration de clé étant spécifique à un emplacement d'enregistrement et pouvant ensuite être détectée pour identifier le début d'un emplacement donné parmi une pluralité d'emplacements d'enregistrement (34, 36, 38) de manière à permettre la détermination de l'emplacement spatial de données à enregistrer ensuite à un emplacement spécifié parmi lesdits emplacements d'enregistrement.

13. Procédé suivant la revendication 12, caractérisé en ce que l'opération d'excitation comprend en outre l'enregistrement sur ladite bande d'une dite première configuration comprenant une succession de zones magnétisées alternant, à une première fréquence spatiale prédéterminée, entre une première configuration secondaire (22) présentant un état magnétique unidirectionnel et une deuxième configuration secondaire (24) présentant une succession de sous-zones entre des états magnétiques de sens opposé, à une deuxième fréquence spatiale qui est différente de ladite première fréquence spatiale et supérieure à celle-ci, et l'enregistrement sur la bande d'une dite deuxième configuration comprenant une succession de zones magnétisées, ces zones alternant entre des états magnétiques de sens opposé à ladite deuxième fréquence spatiale.

14. Procédé suivant la revendication 13, caractérisé en ce que ladite opération d'excitation comprend :
a) la génération d'un premier train d'impulsions électriques (16) comportant deux composantes (22,24) qui alternent à une première fréquence spatiale prédéterminée, la première composante (22) ayant un courant électrique unidirectionnel et la deuxième composante (24) ayant deux sous-composantes dans lesquelles le courant électrique alterne dans des directions opposées, à une deuxième fréquence spatiale prédéterminée qui est différente de ladite première fréquence spatiale et supérieure à celle-ci, et l'envoi dudit premier train d'impulsions à ladite tête (106) pendant une durée prédéterminée, en réponse à une indication qu'une partie de la bande près d'une de ses extrémités se déplace sous la tête, afin d'enregistrer sur cette partie d'extrémité, en tant que dite première configuration spécifique, une configuration magnétique correspondant audit premier train d'impulsions, et
b) la génération d'un deuxième train d'impulsions électriques (18) comportant deux composantes dans lesquelles le courant électrique alterne dans des directions opposées, à ladite deuxième fréquence spatiale prédéterminée, et l'envoi à ladite tête dudit deuxième train d'impulsions électriques pendant un temps prédéterminé, en réponse à une indication qu'une partie de la bande près de son autre extrémité se déplace sous la tête, afin d'enregistrer sur l'autre partie d'extrémité, en tant que dite deuxième configuration spécifique, une configuration magnétique correspondant audit deuxième train d'impulsions.

15. Procédé suivant les revendications 13 ou 14, caractérisé en ce que ladite opération d'excitation comprend en outre la génération de configurations de signal électrique, correspondant à un code numérique prévu pour l'identification de chacun desdits emplacements d'enregistrement, chacune desdites configurations de signal contenant des configurations secondaires (64, 66, 68, 70, 72, 74) disposées symétriquement par rapport à un emplacement central (76), de sorte que les configurations peuvent être détectées lorsque la bande est déplacée dans un sens ou dans l'autre et que des données peuvent ensuite être enregistrées dans un sens sur certaines des pistes multiples sur la bande et en sens inverse sur les autres pistes, et l'envoi desdites configurations de signal à ladite tête (106) à des instants prédéterminés lorsque que la bande est ainsi déplacée, de manière à enregistrer, sur la partie de la bande comprise entre lesdites parties d'extrémité, ladite pluralité de configurations magnétiques de clé individuellement prédéterminées.

16. Système de commande de la position transversale d'une tête magnétique d'enregistrement/reproduction (106) par rapport à une bande d'enregistrement magnétique (10) mobile le long d'un chemin de déplacement à l'intérieur d'une cartouche de données numériques, pour permettre l'enregistrement et la reproduction à partir d'une piste choisie parmi une pluralité de pistes parallèles sur la bande, ledit système comprenant des moyens (100 et 102) pour positionner et entraîner une dite bande le long dudit chemin de déplacement, et une tête magnétique d'enregistrement et de reproduction (106) placée le long dudit chemin de déplacement et qui répond à des configurations de manière à générer des signaux électriques correspondant à celles-ci, caractérisé en ce que ladite bande comporte des configurations préenregistrées (16, 18 ou 20), s'étendant uniformément sur au moins une partie de la largeur de la bande et se terminant à une ligne commune, lesdites configurations comprenant une première configuration magnétique spécifique (16) enregistrée près d'une extrémité (12) de la bande, indicative du début de la bande et qui peut ensuite être détectée et identifier le début de la bande, une deuxième configuration spécifique (18) préenregistrée près de l'autre extrémité (14) de la bande, différente de la première et qui est indicative de l'extrémité de la bande et peut ensuite être détectée et identifier l'extrémité de la bande, et une pluralité de configurations magnétiques de clé (26, 28, 30 et 32) préenregistrées à des emplacements uniformément espacés le long de la bande et entre les première et deuxième configurations spécifiques, chaque configuration de clé étant spécifique au début d'un emplacement d'enregistrement et pouvant ensuite être détectée pour identifier le début d'un emplacement donné parmi une pluralité d'emplacements d'enregistrement, de manière à permettre la détermination de la position spatiale de données à enregistrer ensuite à un emplacement spécifique parmi lesdits emplacements d'enregistrement, ledit système étant en outre caractérisé par des moyens (108 et 112) pour commander par incréments le positionnement de ladite tête transversalement audit chemin de déplacement au-delà de ladite ligne commune, et par des moyens de traitement (130) qui répondent auxdits signaux électriques correspondant à l'une quelconque desdites configurations de manière à activer lesdits moyens de positionnement de tête afin de déplacer par incréments la tête transversalement pour déterminer une position de référence de tête à l'endroit de ladite ligne commune à partir de laquelle le mouvement subséquent par incréments de la tête peut être indexé afin de permettre de positionner transversalement la tête à une distance choisie parmi une pluralité de distances prédéterminées par rapport à la position de référence, chacune de ces distances définissant initialement et correspondant ensuite à l'une de ladite pluralité de pistes.

17. Système suivant la revendication 16, caractérisé en ce que lesdites configurations sur la bande s'étendent uniformément sur toute la largeur de la bande, lesdits moyens (108 et 112) pour positionner par incréments ladite tête comprenant des moyens pour positionner par incréments ladite tête au-delà d' un bord de la bande, et en ce que lesdits moyens de traitement (130) comprennent des moyens (142 et 144) pour engendrer un mouvement transversal par incréments de ladite tête de manière à déterminer ladite position de référence de tête à un bord de la bande.

18. Système suivant la revendication 16, caractérisé en ce que lesdites configurations sur la bande comprennent une pluralité de configurations numériques différentes de clé (26, 28, 30 et 32) de longueur égale, séparées les unes des autres par des emplacements d'enregistrement de longueur égale plus grande, chaque configuration de clé identifiant de façon unique un emplacement d'enregistrement adjacent, lesdits moyens de traitement (130) comprenant des moyens (132, 134, 136, 138, 140) qui répondent à des signaux électriques correspondant auxdites configurations de clé et à ladite position de référence pour activer lesdits moyens de positionnement et d'entraînement (100 et 102) de manière à entraîner la bande à un emplacement d'enregistrement adjacent à une configuration de clé choisie, et également pour permettre auxdits moyens de positionnement de tête (108 et 112) de positionner la tête à une distance choisie de ladite position de référence, de sorte que des données peuvent être enregistrées ou reproduites à l'emplacement d'enregistrement choisi et sur la piste choisie définie par ladite distance.

19. Système suivant l'une quelconque des revendications 16 à 18, caractérisé en ce que lesdits moyens (130) répondant aux signaux électriques comprennent en outre des moyens (118) pour fixer une valeur de seuil de ces signaux et pour détecter le point dudit mouvement par incréments auquel le niveau détecté desdits signaux tombe au-dessous dudit niveau de seuil, de façon à établir ladite position de référence de tête.

20. Système suivant l'une quelconque des revendications 16 à 18, caractérisé en ce que lesdits moyens de positionnement par incréments de la tête comprennent un moteur pas-à-pas (112) pour déplacer transversalement pas-à-pas la position de ladite tête d'une distance égale à un multiple entier d'un espacement de piste à piste prédéterminé.

21. Système suivant l'une quelconque des revendications 16 à 20, caractérisé en outre par

(e) des moyens qui répondent aux signaux électriques correspondant auxdites première ou deuxième configurations spécifiques, ces moyens de réponse comprenant

(i) des moyens (124) reliés à ladite tête de lecture pour engendrer une impulsion d'indication d'intervalle chaque fois que les signaux correspondant aux composantes alternant à ladite deuxième fréquence spatiale ne sont pas détectés dans un laps de temps donné,

(ii) un tachymètre (104) pour générer une succession d'impulsions dont la fréquence est indicative de la vitesse de déplacement de la bande, et

(iii) lesdits moyens de traitement (130) comprenant un premier compteur (134), raccordé de manière à recevoir lesdites impulsions venant dudit tachymètre pour compter un nombre déterminé de ces impulsions et pour fournir une impulsion de sortie à la fin dudit compte en tant qu'indication du passage d'une longueur donnée de bande, et comprenant un deuxième compteur (132) raccordé de manière à recevoir ladite impulsion d'indication d'intervalle et ladite impulsion de sortie dudit premier compteur, pour compter le nombre des impulsions d'indication d'intervalle reçues avant la réception de ladite impulsion de sortie, de sorte que l'absence d'impulsions d'indication d'intervalle comptées avant la réception de ladite impulsion de sortie est distinguée comme correspondant à ladite deuxième configuration spécifique, et un nombre compté d'impulsions d'indication d'intervalle supérieur à une valeur donnée avant la réception de ladite impulsion de sortie est distingué comme correspondant à ladite première configuration spécifique.

## Ansprüche

1. Digitaldaten-Speicherksssette mit einem Gehäuse und einem in dem Gehäuse längs einer Transportbahn bewegbaren, magnetischen Speicherband (10), dadurch gekennzeichnet, daß auf dem Band (10) voraufgezeichnete Muster (16, 18, 20) vorgesehen sind, die sich gleichmäßig über mindestens einen Teil der Breite des Sandes erstrecken und eine Steuerung des Ortes von danach in dem genannten Teil auf einer Vielzahl von Spuren aufzuzeichnenden Daten ermöglichen, daß die genannten Muster ein erstes und ein zweites, spezifisches Muster (15 bzw. 18) umfassen, die in der Nähe je eines Endes (12 bzw.14) des Bandes angeordnet und dieses Ende bezeichnen und danach zur Kennzeichnung je eines der Enden des Bandes ablesbar sind, sowie eine Mehrzahl von Schlüsselmustern (26, 28, 30, 32), die zwischen dem ersten und dem zweiten Muster in gleichen Abständen voneinander längs des Bandes angeordnet und für je eine Aufzeichnungsstelle einer Mehrzahl von Aufzeichnungsstellen spezifisch sind, den Beginn der Aufzeichnungsstelle bezeichnen und danach zur Anzeige des Anfanges derselben ablesbar sind.

2. Digitaldaten-Speicherkassette nach Anspruch 1 für die Verwendung in einer Datenspeicherkassetten-Laufwerk mit einem Schreib- und Lesekopf (106), der quer zu der Bandtransportbahn verstellbar ist, dadurch gekennzeichnet, daß sich jedes der genannten Muster gleichmäßig über die ganze Breite des Bandes erstreckt und daß die Ränder der Muster (16, 18, 20) mittels des genannten Kopfes zwecks Bestimmung einer Kopfbezugsstellung erkennbar sind, von der aus der Kopf gesteuert querverstellbar ist.

3. Digitaldaten-Speicherkassette anch Anspruch 1, die für die Verwendung in einem Datenspeicherkassetten-Laufwerk geeignet ist, das einen Schreib- und Lesekopf (106) hat, der quer zu der Bandtransportbahn verstellbar ist, um ein Einschreiben und Lesen von Daten auf bzw. von einer Mehrzahl von sich längs des Bandes erstreckenden, parallelen Spuren (58, 60, 62) zu ermöglichen, dadurch gekennzeichnet, daß sich jedes der genannten Muster gleichmäßig über die ganze Breite des Bandes erstreckt und daß die Ränder der Muster (16, 18, 20) mittels des genannten Kopfes zwecks Bestimmung einer Kopfbezugsstellung erkennbar sind, von der aus der Kopf zu einer gegebenen Spur der Mehrzahl von Spuren gesteuert querverstellbar ist.

4. Digitaldaten-Speicherkassette nach einem der vorhergehenden Ansprüche, dadurch gekennzeichnet, daß jedes der genannten Schlüsselmuster an seinem vorlaufenden und nachlaufenden Ende Teilmuster (64 und 66, 68 und 70, 72 und 74) besitzt, die eine Synchronisation am Anfang jedes Schlüsselmusters ermöglichen.

5. Digitaldaten-Speicherkassette nach einem der vorhergehenden Ansprüche, dadurch gekennzeichnet, daß das erste Muster (16) eine Folge von magnetisierten Zonen (22, 24) besitzt, in der mit einer ersten vorherbestimmten Ortsfrequenz ein erstes Teilmuster (22), in einem einseitig gerichteten magnetischen Zustand und zweites Teilmuster (24) miteinander abwechseln, in dem eine Folge von Teilzonen in einander entgegengesetzt gerichteten magnetischen Zuständen mit einer zweiten Ortsfrequenz aufeinanderfolgen, die sich von der ersten Ortsfrequenz unterscheidet und höher ist als dieses, und daß das zweite Muster (18) eine Folge von magnetisierten Zonen umfaßt, in der einander entgegengesetzte magnetische Zustände mit der zweiten Ortsfrequenz aufeinanderfolgen.

6. Datenspeicherkassette nach einem der vorhergehenden Ansprüche, dadurch gekennzeichnet, daß die Schlüsselmuster (26, 28, 30, 32) einem digitalen Code entsprechen, der bei einem Transport des Bandes in der einen und der anderen Richtung zum Kennzeichnen jeder der Aufzeichnungsstellen geeignet sind, so daß danach ein Einschreiben von Daten auf einigen Spuren der Mehrzahl der Spuren des Bandes in einer Richtung und auf den übrigen Spuren in der entgegengesetzten Richtung möglich ist.

7. Datenspeicherkassette nach Anspruch 6, soweit er auf den Anspruch 4 rückbezogen ist, dadurch gekennzeichnet, daß die Teilmuster (64 und 66, 68 und 70, 72 und 74) in Bezug auf einen mittleren Ort (76) symmetrisch angeordnet und daher unabhängig von der Rewegungsrichtung des Bandes ablesbar sind.

8. System zum Aufzeichnen eines vorherbestimmten Formats auf einem magnetischen Speicherband (10) das in Digitaldaten-Speicherkasssttte und einem Laufwerk (100, 102) dafür verwendbar ist, um eine Steuerung der Querpositionierung eines Schreib- und Lesekopfes (106) in dem Laufwerk und der Längsbewegung des Bandes in der Kassette und damit auch eine Steuerung des späteren Einschreibens und Ablesens von Digitaldaten an bzw. von vorherbestimmten Aufzeichnungsstellen in einer gewählten Spur längs des Bandes zu ermöglichen, mit

    a) einer Einrichtung (100, 102) zum Positionierendes magnetischen Speicherbandes (10) und zum Transport desselben längs einer Transportbahn, und

    b) einer Einrichtung (108, 112) zum Positionieren eines magnetischen Schreibkopfes längs der Transportbahn, wobei der Schreibkopf einen zu der Transportbahn im wesentlichen normalen Schreibspalt besitzt, dadurch gekennzeichnet, daß die Spaltbreite über die Breite des Bandes konstant ist, so daß eine gleichmäßige Aufzeichnung von magnetischen Mustern über die Breite des Bandes ermöglicht ist,

c) wobei das System eine Einrichtung zum Zuführen von Energie zu dem genannten Kopf besitzt, so daß in dem Band eine Mehrzahl von Mustern (16, 18, 20) aufgezeichnet werden, die sich gleichmäßig über mindestens einen Teil der Breite des Bandes erstrecken und danach eine Steuerung der Orte ermöglichen, an denen danach auf einer Mehrzahl von Spuren Daten eingeschrieben werden sollen, wobei die Aufzeichnungsstelle in allen Spuren im wesentlichen an derselben Stelle der Breite der Spur angeordnet ist, die Energiezuführeinrichtung eine Einrichtung umfaßt, die geeignet ist, in dem genannten Band in der Nähe seines einen Endes ein erstes spezifisches magnetisches Muster (16) zu erzeugen, das den Anfang des Bandes bezeichnet und danach zum Kennzeichnen des Anfanges des Bandes ablesbar ist, ein zweites spezifisches Muster (18), das in der Nähe des anderen Endes des Bandes angeordnet ist, sich von dem ersten Muster unterscheidet, das Ende des Bandes bezeichnet und danach zum Kennzeichnen des Endes des Bandes erkennbar ist, und eine Mehrzahl von magnetischen Schlüsselmustern (26, 28, 30, 32), die zwischen dem ersten und dem zweiten spezifischen Muster in gleichen Abständen voneinander längs des Bandes angeordnet sind und jeweils für je eine Aufzeichnungsstelle einer Mehrzahl von Aufzeichnungsstellen (34, 36, 38) spezifisch und danach zur Kennzeichnung des Anfanges der zugeordneten Aufzeichnungsstelle ablesbar sind, so daß eine Steuerung des Ortes ermöglicht ist, an dem danach Daten an einer gegebenen der Aufzeichnungsstellen eingeschrieben werden sollen.

9. System nach Anspruch 8, dadurch gekennzeichnet, daß die Einrichtung zum Zuführen von Energie ferner eine Einrichtung aufweist, die dazu dient, in dem Band ein erstes der genannten Muster aufzuzeichnen, das eine Folge von magnetisierten Zonen (22, 24) aufweist, die zwischen einem ersten Teilmuster (22) in einen einseitig gerichteten magnetischen Zustand und einem zweiten Teilmuster (24) mit einer ersten vorherbestimmten Teilfrequenz abwechseln, wobei das zweite Teilmuster (24) eine Folge von mit einer zweiten Ortsfrequenz aufeinanderfolgenden Teilzonen mit einander entgegengesetzten magnetischen Zuständen besitzt, die zweite Ortsfrequenz sich von der ersten Ortsfrequenz unterscheidet und höher ist als diese, und eine Einrichtung vorgesehen ist, die dazu dient, in dem genannten Band ein zweites der genannten Muster aufzuzeichnen, das eine Folge von mit der zweiten Ortsfrequenz abwechselnden magnetisierten Zonen mit einander entgegengesetzten magnetischen Zuständen besitzt.

10. System nach Anspruch 9, dadurch gekennzeichnet, daß die Einrichtung zum Zuführen von Energie umfaßt

a) eine Einrichtung zum Erzeugen einer ersten elektrischen Impulsfolge mit zwei Komponenten (22, 24), die einander mit einer ersten vorherbestimmten Ortsfrequenz abwechseln und deren erste Komponente (22) einen einseitig gerichteten elektrischen Strom besitzt und die zweite Komponente (24) zwei Teilkomponenten besitzt, in denen elektrische Ströme in einander entgegengesetzten Richtungen fließen und die einander mit einer zweiten vorherbestimmten Ortsfrequenz abwechseln, die sich von der ersten Ortsfrequenz unterscheidet und höher ist als diese, und zur Abgabe der ersten Impulsfolge an den genannten Kopf (106) während einer vorherbestimmten Zeit auf Grund einer Anzeige, daß ein einem Ende des Bandes benachbarter Teil desselben an dem Kopf vorbeiwandert, so daß dann auf dem genannten Endteil als das erste spezifische Muster ein der ersten Impulsfolge entsprechendes magnetisches Muster aufgezeichnet wird, und

b) eine Einrichtung zum Erzeugen einer zweiten elektrischen Impulsfolge (18) mit zwei Komponenten, in denen der elektrische Ströme in einander entgegengesetzten Richtungen fließen und die einander mit der zweiten vorherbestimmten Ortsfrequenz abwechseln, und zur Abgabe der zweiten elektrischen Impulsfolge an den Kopf während einer vorherbestimmten Zeit auf Grund einer Anzeige, daß ein dem anderen Ende des Bandes benachbarter Teil desselben an dem Kopf vorbeiwandert, so daß dann auf den anderen Endteil als das zweite spezifische Muster ein der zweiten Impulsfolge entsprechendes magnetisches Muster aufgezeichnet wird.

11. System nach Anspruch 9 oder 10, dadurch gekennzeichnet, daß die Einrichtung zum Zuführen von Energie ferner eine Einrichtung zum Erzeugen von elektrischen Signalmustern aufweist, die einem digitalen Code entsprechen, der zur Kennzeichnung jeder der Aufzeichnungsstellen geeignet ist, wobei jedes dieser Signalmuster Teilmuster (64, 66, 68, 70, 72, 74) besitzt, die in Bezug auf einen zentralen Ort (76) symmetrisch sind, so daß die Muster bei einer Bewegung des Bandes in der einen und der anderen Richtung ablesbar sind und danach auf dem Band Daten auf einigen der Souren der Mehrzahl von Spuren in einer Richtung und auf den übrigen Spuren in der entgegengesetzten Richtung aufgezeichnet werden können, und zur Abgabe der genannten Signalmuster an den Kopf (106) zu vorherbestimmten Zeiten während der Bewegung des Bandes, um die genannte Mehrzahl von einzeln vorherbestimmten magnetischen Schlüsselmustern auf dem zwischen den genannten Endteilen liegenden Teil des Bandes aufzuzeichnen.

12. Verfahren zum Aufzeichnen eines vorherbestimmten Formats auf einem magnetischen Speicherband (10) zur Verwendung in einer Digitaldaten-Speicherkassette und einem Laufwerk (100, 102) dafür zwecks Ermöglichung einer Steuerung der Querpositionierung eines Schreib- und Lesekopfes (106) in dem Laufwerk und der Längsbewegung des Bandes in der Kassette und damit der Steuerung des späteren Einschreibens von digitalen Daten auf dem Band oder der Wiedergabe von Digitaldaten von dem Band an vorherbestimmten Aufzeichnungsstellen einer gewählten Spur längs des Bandes, wobei das Verfahren folgende Schritte umfaßt:
a) däs magnetische Speicherband (10) wird längs einer Transportbahn positioniert (108, 112) und bewegt,
b) längs der Transportbahn wird ein magnetischer Schreibkopf (106) bewegt, der einen Schreibspalt hat, der sich im wesentlichen normal zu der Transportbahn erstreckt, und das Verfahren dadurch gekennzeichnet ist, daß
c) dem Kopf (106), der so angeordnet ist, daß seine Spaltbreite über die gnaze Breite des Bandes konstant ist, derart Energie zugeführt wird, daß ein einheitliches Aufzeichnen von Magnetmustern über die ganze Breite des Bandes ermöglicht wird und daher in dem Band eine Mehrzahl von Mustern (16, 18, 20) aufgezeichnet werden können, die sich gleichmäßig über mindestens einen Teil der Breite des Bandes erstrecken und danach eine Steuerung der Orte möglich ist, an denen Paten auf einer Mehrzahl von Spuren des Bandes aufgezeichnet werden, wobei die Aufzeichnungsorte in den einzelnen Spuren quer zu den Spuren im wesentlichen miteinander fluchten und die Einrichtung zum Zuführen von Energie eine Einrichtung aufweist, die dazu dient, in dem Band in der Nähe des einen Endes desselben ein erstes spezifisches magnetisches Muster (16) zu erzeugen, das den Anfang des Bandes bezeichnet und danach zur Kennzeichnung des Bandanfanges ablesbar ist, ferner in der Nähe des anderen Endes des Bandes ein zweites spezifisches Muster (18), das sich von dem ersten Muster unterscheidet und das Ende des Bandes bezeichnet und danach zur Kennzeichnung des Bandendes ablesbar ist, und eine Mehrzahl von magnetischen Schlüsselmustern (26, 28, 30, 32), die zwischen dem ersten und dem zweiten spezifischen Muster in gleichen Abständen voneinander längs des Bandes angeordnet sind und die je einer Aufzeichnungsstelle einer Mehrzahl von Aufzeichnungsstellen (34, 36, 38) zugeordnet sind und deren Anfänge bezeichnen und danach zur Anzeige des Anfangs der betreffenden Aufzeichnungsstelle ablesbar sind, so daß eine Steuerung des Ortes ermöglicht wird, an dem Daten danach an einer gegebenen der Aufzeichnungsstellen aufgezeichnet werden.

13. Verfahren nach Anspruch 12 dadurch gekennzeichnet, daß in dem Energiezuführungsschritt in dem Band als das erste Muster eine Folge von magnetisierten Zonen aufgezeichnet wird, in der mit einer ersten vorherbestimmten Ortsfrequenz ein erstes Teilmuster (22) mit einem einseitig gerichteten magnetischen Zustand und ein zweites Teilmuster (24) aufeinanderfolgen, das zweite Teilmuster (24) eine Folge von Teilmustern in einander entgegengesetzt gerichteten magnetischen Zuständen aufweist, die einander mit einer zweiten Ortsfrequenz abwechseln, die sich von der ersten Ortsfrequenz unterscheidet und höher ist als diese, und ferner in dem Energiezuführungsschritt in dem Band als das zweite Muster eine Folge von magnetisierten Zonen aufgezeichnet wird, die einander entgegengesetzt gerichtete magnetische Zustände haben und einander mit der zweiten Ortsfrequenz abwechseln.

14. Verfahren nach Anspruch 13, dadurch gekennzeichnet, daß in dem Energiezuführungsschritt
a) eine erste elektrische Impulsfolge (16) erzeugt wird, die zwei Komponenten besitzt, die einander mit einer ersten vorherbestimmten Ortsfrequenz abwechseln und deren erste Komponente (22) einen einseitig gerichteten elektrischen Strom besitzt und die zweite Komponente (24) zwei Teilkomponenten besitzt, in denen elektrische Ströme in einander entgegengesetzten Richtungen fließen und die einander mit einer zweiten vorherbestimmten Ortsfrequenz abwechseln, die sich von der ersten Ortsfreqeunz unterscheidet und höher ist als diese, und die erste Impulsfolge während einer vorherbestimmten Zeit an den Kopf (106) auf grund einer Anzeige abgegeben wird daß ein einem Ende des Bandes benachbarter Teil desselben an dem Kopf vorbeiwandert, so daß dann auf dem genannten Endteil als das erste spezifische Muster ein der ersten Impulsfolge entsprechendes magnetisches Muster aufgezeichnet wird,

b) eine zweite elektrische Impulsfolge (18) erzeugt wird, die zwei Komponenten besitzt, in denen elektrische Ströme in einander entgegengesetzten Richtungen fließen und die einander mit der zweiten vorherbestimmten Ortsfrequenz abwechseln und die zweite elektrische Impulsfolge während einer vorherbestimmten Zeit an den Kopf (106) auf Grund einer Anzeige abgegeben wird, daß ein dem anderen Ende des Bandes benachbarter Teil desselben an dem Kopf vorbeiwandert, so daß dann auf den anderen Endteil als das zweite spezifische Muster ein der zweiten Impulsfolge entsprechendes magnetisches Muster aufgezeichnet wird.

15. Verfahren nach Anspruch 13 oder 14, dadurch gekennzeichnet, daß in dem Energiezuführungsschritt ferner elektrische Signalmuster erzeugt werden, die einem digitalen Code entsprechen der zur Kennzeichnung jeder der Aufzeichnungsstellen geeignet ist, wobei jedes dieser Signalmuster Teilmuster (64, 66, 68, 70, 72, 74) besitzt, die in Bezug auf einen zentralen Ort (76) symmetrisch sind, so daß die Muster bei einer Bewegung des Bandes in der einen und der anderen Richtung ablesbar sind und danach auf dem Band Daten auf einigen der Spuren der Mehrzahl von Spuren in einer Richtung und auf den übrigen Spuren in der entgegengesetzten Richtung aufgezeichnet werden können, und die genannten signalmuster zu vorherbestimmten Zeiten während der Bewegung des Bandes an den Kopf (106) abgegeben werden, um die genannte Mehrzahl von einzeln vorherbestimmten magnetischen Schlüsselmustern auf dem zwischen den genannten Endteilen liegenden Teil des Bandes aufzuzeichnen.

16. System zur Steuerung der Quereinstellung eines magnetischen Schreib- und Lesekopfes (106) relativ zu einem magnetischen Speicherband (10), das in einer Digitaldaten-Speicherkassette längs einer Transportbahn bewegbar ist, um ein Aufzeichnen auf einer gewählten Spur einer Mehrzahl von auf dem Band vorgesehener Spuren und eine Wiedergabe von dieser Spur zu ermöglichen, wobei das System eine Einrichtung (100, 102) zum Positionieren und Antreiben eines derartigen Bandes längs der Transportbahn und einen magnetischen Aufzeichnungs- und Wiedergabekopf (106) aufweist, der längs der Transportbahn positioniert ist und elektrische Signale erzeugt, die auf dem Band aufgezeichneten Signalen entsprechen, dadurch gekennzeichnet, daß auf dem Band vorher aufgezeichnete Muster (16, 18 oder 20) vorhanden sind, die sich gleichmäßig mindestens über einen Teil der Breite des Bandes erstrecken und an einer gemeinsamen Linie enden und die ein erstes spezifisches magnetisches Muster (16) umfassen, das vorher in der Nähe des einen Endes (12) des Bandes aufgezeichnet worden ist und das den Anfang des Bandes bezeichnet und danach zur Anzeige des Bandanfanges ablesbar ist, ferner ein zweites spezifisches Muster (18), das vorher in der Nähe des anderen Endes (14) des Bandes aufgezeichnet wurde, von dem ersten Muster verschieden ist und das Bandende bezeichnet und danach zur Anzeige des Bandendes ablesbar ist, und eine Mehrzahl von magnetischen Schlüsselmustern (26, 28, 30, 32), die an Stellen vorher zwischen dem ersten und dem zweiten spezifischen Muster in gleichen Abständen voneinander längs des Bandes aufgezeichnet worden sind und für je eine Aufzeichnungsstelle einer Mehrzahl von Aufzeichnungsstellen spezifisch sind und den Anfang dieser Aufzeichnungsstelle bezeichnen und danach zur Anzeige des Anfangs dieser Aufzeichnungsstelle und zu derselben ablesbar sind, so daß eine Steuerung des Ortes ermöglicht wird, an dem danach Daten an einer gegebenen dieser Aufzeichnungsstellen eingeschrieben werden, ferner gekennzeichnet durch eine Einrichtung (108, 112) zum steuerbaren inkrementalen Positionieren des Kopfes quer zu der Transportbahn über die genannte gemeinsame Linie hinaus, und durch eine Prozessoreinrichtung (130), die auf Grund der einem beliebigen der genannten Muster entsprechenden, elektrischen Signale die Kopfpositioniereinrichtung veranlaßt, den Kopf derart inkremental in der Querrichtung zu bewegen, daß an der genannten gemeinsamen Linie eine Kopfbezugsstellung bestimmt wird, von der aus der Kopf danach in der Querrichtung inkremental in eine von mehreren ausgewählten Stellungen bewegbar ist, in der er in vorherbestimmten Abständen von der Bezugsstellung angeordnet ist, wobei jeder dieser Abstände eine Spur der Mehrzahl von Spuren bestimmt und dieser Spur danach entspricht.

17. System nach Anspruch 16, dadurch gekennzeichnet, daß sich die genannten Muster auf dem Rand gleichmäßig über dessen ganze Breite erstrecken, daß die Einrichtung (108 und 112) zum inkrementalen Positionieren des Kopfes eine Einrichtung zum inkrementalen Positionieren des Kopfes über einen Rand des Bandes hinaus umfassen, und daß die Prozessoreinrichtung (130) eine Einrichtung (142, 144) umfaßt, die dazu dient, durch eine inkrementale Querbewegung des Kopfes die genannte Kopfbezugsstellung am einen Rand des Bandes zu bestimmen.

18. System nach Anspruch 16, dadurch gekennzeichnet, daß die genannten Muster auf dem Band eine Mehrzahl von gleich langen, unterschiedlichen digitalen Schlüsselmustern (26, 28, 30, 32) umfassen, die voneinander durch Aufzeichnungsstellen von größerer, untereinander gleicher Länge getrennt sind, und jedes Schlüsselmuster spezifisch eine benachbarte Aufzeichnungsstelle bezeichnet, und die Prozessoreinrichtung (130) eine Einrichtung (132, 134, 136, 138, 140) aufweist, die auf Grund von den Schlüsselmustern und der Bezugsstellung entsprechenden elektrischen Signalen die Positionier- und Antriebseinrichtung (100, 102) veranlaßt, das Band an eine Aufzeichnungsstelle im Bereich eines ausgewählten Schlüsselmusters zu bewegen und die Kopfpositioniereinrichtung (100, 112) veranlaßt, den Kopf in einem gewählten Abstand von der Bezugsstellung zu positionieren, so daß dann an der gewählten Aufzeichnungsstelle auf der durch den genannten Abstand bestimmten Spur Daten auf dem Band eingeschrieben oder von ihm abgelesen werden können.

19. System nach einem der Ansprüche 16 bis 18, dadurch gekennzeichnet, daß die auf elektrische Signale ansprechende Einrichtung (130) ferner eine Einrichtung (118) besitzt, die dazu dient, einen Schwellenwert für diese Signale zu bestimmten und als Kopfbezugsstellung jenen Punkt der genannten inkrementalen Bewegung zu bestimmen, an dem der erfaßte Pegel der Signale unter den genannten Schwellenwert fällt.

20. System nach einem der Ansprüche 16 bis 18, dadurch gekennzeichnet, daß die inkrementale Kopfpositioniereireichtung einen Schrittmotor (112) umfaßt, der dazu dient, den Koof in der Querrichtung über eine Strecke fortzuschalten, die einem ganzzahligen Vielfachen eines vorherbestimmten Abstandes zwischen den Spuren ist.

21. System nach einem der Ansprüche 16 bis 20, gekennzeichnet durch
e) eine Einrichtung, die auf dem ersten und dem zweiten spezifischen Muster entsprechende Signale anspricht und die umfaßt:
i) eine mit dem Wiedergabekopf gekoppelte Einrichtung (124) zum Erzeugen jeweils eines Spaltanzeigeimpulses, wenn innerhalb einer gegebenen Zeit keine Signale erfaßt worden sind, die miteinander mit der zweiten Ortsfrequenz abwechselnden Komponenten entsprechen, und
ii) eine Tachometereinrichtung (104) zum Erzeugen einer Impulsfolge, deren Freqenz Ein Maß der Bandgeschwindigkeit ist, wobei
iii) die Prozessoreinrichtung (130) einen ersten Zähler (134) besitzt, der so gekoppelt ist, daß er die von der Tachometereinrichtung kommenden Impulse empfängt und der diese Impulse bis zu einer bestimmten Anzahl zählt und nach Durchführung dieser Zählung durch Abgabe eines Ausgabeimpulses den Vorbeigang einer gegebenen Bandlänge anzeigt, sowie einen zweiten Zähler (132), der so gekoppelt ist, daß er den Spaltanzeigeimpuls und von den Ausgangsimpuls des ersten Zählers empfängt und der die bis zum Empfang des genannten Ausgangsimpulses empfangenen Spaltanzeigeimpulse zählt, wobei das Nichtzählen eines Spaltanzeigeimpulses vor dem Empfang des genannten Ausgangsimpulses dem Auftreten des zweiten spezifischen Musters entspricht und das Zählen von Spaltenzeigeimpulsen in einer einen gegebenen Wert übersteigenden Anzahl vor dem Empfang des Ausgangsimpulses dem Auftreten des ersten spezifischen Musters entspricht.

EP 0 035 539 B1

FIG.1

FIG.2

FIG.3

FIG.4

FIG.5

FIG. 6

EP 0 035 539 B1